# EUROPEAN PATENT SPECIFICATION

(11) **EP 4 129 747 B1**
(45) Date of publication and mention of the grant of the patent: **03.09.2025**
(21) Application number: 22187196.5
(22) Date of filing: 27.07.2022
(51) Int. Cl.: B60L 53/63, B60L 53/66, B60L 53/51, H02J 3/32, H02J 3/38, H02J 7/00, H02J 13/00, B60L 55/00, G06Q 50/06, G07C 5/00, H02J 7/34, G06Q 10/063, G06Q 50/40

(54) **SYSTEM FOR THE MANAGEMENT/MONITORING OF CHARGING MEANS OF ELECTRIC VEHICLE**
SYSTEM ZUR VERWALTUNG/ÜBERWACHUNG VON AUFLADEUNGSMITTELN EINES ELEKTROFAHRZEUGS
SYSTÈME DE GESTION/SURVEILLANCE DES MOYENS DE CHARGEMENT DE VÉHICULE ÉLÉCTRIQUE

(30) Priority: 02.08.2021 IT 202100020813
(43) Date of publication of application: 08.02.2023
(73) Proprietor: Sinapsi S.r.l., 06083 Bastia Umbra (PG) (IT)
(72) Inventor: ROTINI, Stefano, 06083 Bastia Umbra (PG) (IT); VALERII, Massimo, 06083 Bastia Umbra (PG) (IT)
(74) Representative: Brunacci, Marco

(56) References cited:
- WO-A2-2010/042550
- WO-A2-2013/065380
- US-A1- 2010 145 837
- US-A1- 2012 323 386
- US-A1- 2021 170 903
- US-B2- 8 686 687

## Description

### Technical Field

The present invention relates to a system for the management/monitoring of charging means of electric vehicles.

### Background Art

A variety of systems for the management/monitoring of charging means of electric vehicles are known, which are employed to enable the users of such means to manage/monitor their operation according to their needs.

For example, such systems allow for the verification of the electric vehicle's charging status, the so-called State Of Charge (SOC), vehicle charging time, charging speed and more.

These systems are however open to improvement.

In fact, the systems of known type are installed on the same charging means to be managed/monitored. Therefore, the user of these systems sometimes has to physically go to the place of installation of the charging means to make use of them.

However, generally, the charging means are installed inside special premises, such as e.g. garages, parking spaces or the like, used only to house the electric vehicle to be charged and hardly frequented by the user for other purposes. Consequently, especially in condominiums, but not only, such premises are inconvenient and impractical to reach whenever it is deemed necessary to manage/monitor the charging means.

Therefore, the need is known to manage/monitor the charging means remotely without having to personally go to where the latter are installed.

In this regard, it is well known to provide the charging means with the appropriate wireless communication means that enable their remote management/monitoring.

However, very often, the premises housing the communication means are underground structures and/or made of construction materials that do not allow for the propagation of the signal needed to communicate with the charging means.

Consequently, to date, the most common solution is to install a purpose-built physical link to communicate with the charging means. However, such installation turns out to be particularly expensive and complex.

### Description of the Invention

The main aim of the present invention is to devise a system for the management/monitoring of charging means of electric vehicles that enables easy, smooth and fast communication with the charging means.

Another object of the present invention is to devise a system for the management/monitoring of charging means of electric vehicles that enables communication with the charging means without the need to install a physical link specifically made for this purpose.

A further object of the present invention is to devise a system for the management/monitoring of charging means of electric vehicles that allows managing/monitoring the charging means according to the status of the power grid to which the charging means themselves are connected.

An additional object of the present invention is to devise a system for the management/monitoring of charging means of electric vehicles that allows managing/monitoring both the charging means and the power grid to which the charging means themselves are connected.

Another object of the present invention is to devise a system for the management/monitoring of charging means of electric vehicles that allows the aforementioned drawbacks of the prior art to be overcome within the framework of a simple, rational, easy and efficient to use as well as cost-effective solution. The aforementioned objects are achieved by this system for the management/monitoring of charging means of electric vehicles having the characteristics of claim 1.

Document WO 2013/065380 A2 discloses a charge-discharge system including a vehicle 10, an electric power cable 20, a plug-in station 30, a HEMS 40, and a commercial power supply 50. In a state where the connector 21 of the electric power cable 20 is connected with the inlet of the vehicle 10, an electric power is discharged/supplied from the vehicle electric storage device 11 to an external electric load.

Document US 2021/170903 A1 discloses a power management system includes a plurality of power storages and a server.

Document US 2012/323386 A1 discloses an electric power supply system has, as multiple storage units, an output type battery of high output and small capacity and a capacity type battery of low output and large capacity.

### Brief Description of the Drawings

Other characteristics and advantages of the present invention will become more apparent from the description of a preferred, but not exclusive, embodiment of a system for the management/monitoring of charging means of electric vehicles, illustrated by way of an indicative, yet non-limiting example in the accompanying tables of drawings in which:
Figure 1 is a schematic view of the system according to the invention;

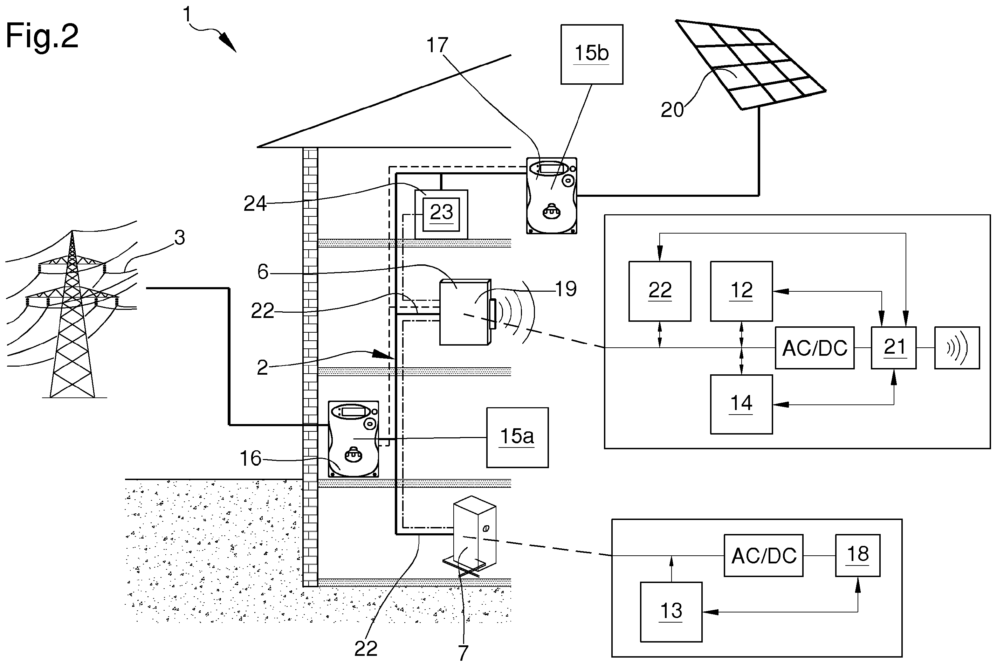

Figure 2 is a schematic view of some details of the system according to the invention.

### Embodiments of the Invention

With particular reference to these figures, reference numeral 1 globally indicates a system for the management/monitoring of charging means of electric vehicles.

The system 1 for the management/monitoring of charging means comprises at least one electricity consumption network 2, operationally connected to an electricity supply network 3, and configured to distribute electricity supplied at least by the supply network 3.

In the remainder of the following disclosure, the term "consumption network" is used to refer to a utility network, such as a household, business electrical grid, or the like, which is adapted to distribute power to one or more utilities electrically connected/connectable to the grid for the operation thereof. Therefore, the electric consumption of the consumption network 2 is substantially defined by the sum of the consumption of the electric loads connected to the network itself.

The term supply network, on the other hand, refers to an electricity distribution network, such as e.g. the national distribution network or the like, employed by one or more supplier entities to supply electricity to one or more electricity consumption networks.

The system 1 additionally comprises charging means 7 of at least one electric vehicle 8, operationally connected to the consumption network 2 to charge the electric vehicle 8.

Specifically, the charging means 7 are configured to charge at least one electric vehicle 8 with the energy supplied by the consumption network 2, such as e.g. through the supply network 3.

In addition, the system 1 comprises management/monitoring means 6 of the charging means 7, operationally connected to the consumption network 2 and configured to control/monitor the charging means 7.

Specifically, the system 1 comprises Power-line Communication (PLC) means 12, 13, positioned between the charging means 7 and the management/monitoring means 6, and configured to allow the communication between the management/monitoring means 6 and the charging means 7 by means of the consumption network 2.

According to the invention, the consumption network 2 extends internally/externally to a building 4 such as e.g. a dwelling or the like, which defines a plurality of rooms/spaces 5.

In addition, the consumption network 2 comprises a plurality of connecting points to the network itself, arranged inside different rooms/spaces 5, and to which the management/monitoring means 6, the charging means 7 and the loading means, not shown in the figures, defining at least partly the consumption of the same consumption network, are connected in a removable manner.

Conveniently, the communication between the charging means 7 and the management/monitoring means 6 takes place directly through the consumption network 2 without the need to establish additional links between them.

In fact, the consumption network 2 must indispensably connect the charging means 7 to the management/monitoring means 6 so as to supply them with the energy they need for operation.

This expedient makes it possible to arrange the charging means 7 in any room/space reached by the consumption network 2, for example, even in a room/space that does not allow wireless communication outside the same room/space, and to arrange the management/monitoring means 6 in a room/space reached by the consumption network 2 and allowing wireless communication outside the same room/space.

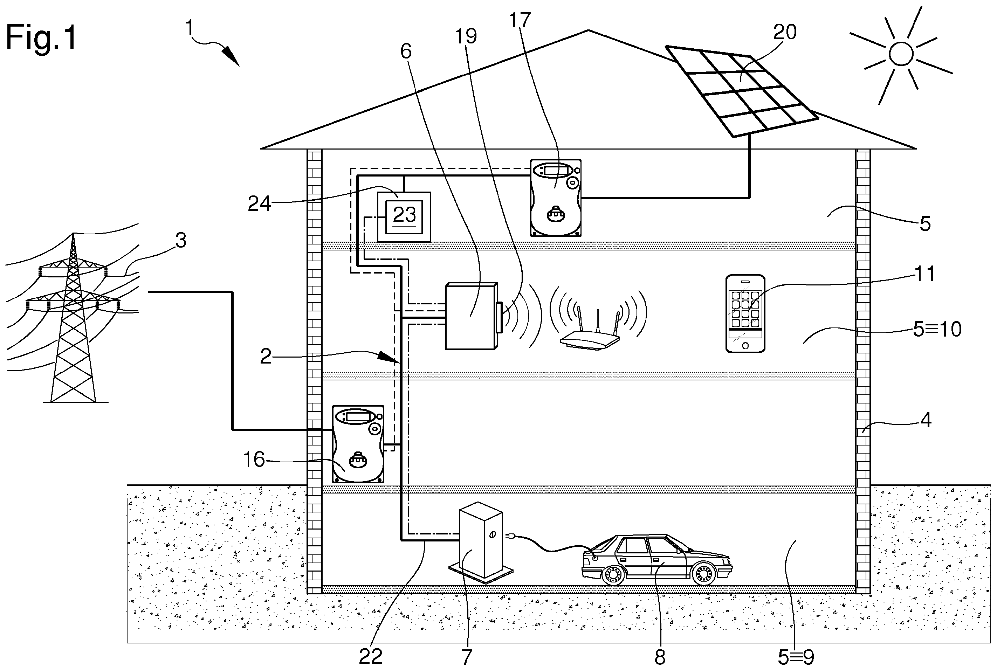

According to the invention, in fact, the charging means 7 are preferably arranged at an underground car garage 9 of the building 4, while the management/monitoring means 6 are arranged at an upper floor 10 of the building 4, as shown in Figure 1.

Preferably, the management/monitoring means 6 are totally separate from the charging means 7.

Advantageously, the management/monitoring means 6 comprise connecting means 19 to command means 11 configured at least to control the management/monitoring means 6.

According to the example of the invention, the connecting means 19 are of the type of wireless-type electronic connecting means, such as e.g. a network card or the like, configured to connect to at least one data network, such as e.g. the Internet.

Preferably, the command means 11 are of the type of electronic command means configured to connect to the same data network to which the connecting means 19 are connected and configured to transmit/receive data/information to/from the management/monitoring means 6.

According to the example of the invention, the command means 11 are of the type of a smart-phone, tablet, PC or the like.

Preferably, the system 1 comprises command means 11.

Conveniently, the management/monitoring means 6 are configured to:
- activate/deactivate the charging means 7; and/or
- adjust the charging time of the electric vehicle 8; and/or
- adjust the electricity consumption of the charging means 7; and/or
- time schedule the activation/deactivation of the charging means 7.

According to the example of the invention, the charging means 7 are electronically controlled by the command means 11.

Advantageously, the system 1 comprises metering means 16, 17 configured to meter the consumption of electricity of the consumption network 2 and to interrupt the supply of the supplied electricity when the consumption thereof by the consumption network 2 reaches a maximum limit of consumption.

In addition, the system 1 comprises Power-line Communication (PLC) transmission means 14, 15a, 15b, positioned between the metering means 16, 17 and the management/monitoring means 6, and configured to allow the communication between the metering means 16, 17 and the management/monitoring means 6 by means of the consumption network 2.

In this way, the communication between the management/monitoring means 6 and the metering means 16, 17 takes place directly through the consumption network 2 without the need to establish additional connections between them.

The consumption network 2, in fact, must indispensably connect the charging means 7 and the management/monitoring means 6, so that the metering means 16, 17 can account for the consumption of the consumption network 2. Preferably, the transmission means 14, 15a, 15b allow the metering means 16, 17 to communicate to the management/monitoring means 6 the consumption of electricity of the consumption network 2.

Conveniently, the system 1 further comprises
- storage means 24 of electricity, operationally connected to the consumption network 2 and configured to store at least part of the electricity produced by the production means 20.

Preferably, the system 1 comprises both the production means 20 and the storage means 24.

In this way, at least part of the energy produced by the production means 20 and stored within the storage means 24.

Advantageously, the energy stored by the storage means 24 is used/consumed by the consumption network 2 as needed.

In addition, the production means 20 and the storage means 24 are operationally independently connected to the consumption network 2.

In this way, the production means 20 and the storage means 24 are operationally connected to each other through the consumption network 2.

It cannot however be ruled out that the production means 20 and the storage means 24 are operationally connected to each other by dedicated connecting means different from the consumption network 2.

In addition, further embodiments of the system 1 cannot be ruled out in which at least one of either the production means 20 or the storage means 24 be operationally connected to the consumption network by means of the other one.

According to the example of invention, the production means 20 are of the type of autonomous means of generating electricity, which is consumed by the consumption network 2 alternatively and/or in combination with the energy supplied by the supply network 3.

Preferably, the production means 20 are of the type selected from the list comprising: photovoltaic, wind, hydroelectricity.

According to the invention, the storage means 24 are of the type of one or more electronic electricity storage devices, such as e.g. a battery or the like.

Conveniently, the system 1 comprises Power-line Communication (PLC) connecting means 22, 23, positioned between the management/monitoring means 6 and the storage means 24, and configured to allow the communication between the management/monitoring means 6 and the storage means 24 by means of the consumption network 2.

In this way, the communication between the management/monitoring means 6 and the storage means 24 takes place directly through the consumption network 2 without the need to establish additional connections between them.

In fact, the consumption network 2 must necessarily connect the management/monitoring means 6 to the storage means 24, so that the consumption network 2 is allowed to use the energy stored by the storage means 24.

Preferably, the connecting means 22, 23 enable the storage means 24 to communicate to the management/monitoring means 6 the amount of electricity stored by the storage means 24 themselves.

Advantageously, the connecting means 22, 23 comprise at least a first connecting device 22, mounted on the management/monitoring means 6, and a second connecting device 23 mounted on the storage means 24.

Appropriately, at least one of the connecting devices 22, 23 is configured to transmit/receive data/information by means of the consumption network 2 to the other of the connecting devices 22, 23.

Advantageously, the communication means 12, 13 comprise at least a first communication device 12, mounted on the management/monitoring means 6, and at least a second communication device 13 mounted on the charging means 7.

Appropriately, at least one of the communication devices 12, 13 is configured to transmit/receive data/information by means of the consumption network 2 to/from the other communication device 12, 13.

Conveniently, the transmission means 14, 15a, 15b comprise at least a first transmission device 14, mounted on the management/monitoring means 6, and at least a second transmission device 15a, 15b mounted on the metering means 16, 17.

Appropriately, at least one of the transmission devices 14, 15a, 15b is configured to transmit/receive data/information by means of the consumption network 2 to/from the other transmission device 14, 15a, 15b.

In this way, the management/monitoring means 6 are configured to communicate with at least one of the charging means 7, the metering means 16, 17 or the storage means 24, thus enabling the system 1 to manage/adjust the entire consumption network 2.

In fact, the management/monitoring means 6 comprise computation means 21 positioned between the consumption network 2 and at least one of the first communication device 12, the first communication device 14 and the first connecting device 22.

Preferably, the computation means 21 are of the type of an electronic data processing device, such as e.g. a microcontroller, CPU or the like.

Conveniently, at least one of the communication means 12, 13, the transmission means 14, 15a, 15b or the connecting means 22, 23 are configured to communicate on the consumption network 2 on a different communication band from at least another of the communication means 12, 13, the transmission means 14, 15a, 15b or the connecting means 22, 23.

Preferably, the communication means 12, 13, the transmission means 14, 15a, 15b, and the connecting means 22, 23 are configured to communicate on the consumption network 2 on different communication bands from each other.

In this way, the communication means 12, 13, the transmission means 14, 15a, 15b and the connecting means 22, 23 do not interfere with each other.

Advantageously, the charging means 7 comprise adjusting means 18 configured to increase/reduce the electricity consumed by the same charging means to charge the electric vehicle 8 depending on at least one of the energy consumption of the consumption network 2, the maximum limit of consumption or the electricity stored by the storage means 24.

Conveniently, the management/monitoring means 6 are configured to share on the consumption network 2, by means of the communication means 12, 13, the transmission means 14, 15a, 15b and the connecting means 22, 23 the energy consumption of the consumption network 2, the maximum limit of consumption with the charging means 7 and the electricity stored by the storage means 24.

In this way, the charging means 7 are configured to reduce their own energy consumption to charge the electric vehicle 8, by slowing down its charging when the electricity consumption of the consumption network 2 is close to the maximum limit value.

On the other hand, the charging means 7 are configured to increase their own energy consumption to charge the electric vehicle 8, by speeding up the charging thereof, when the electricity consumption of the consumption network 2 is significantly lower than the maximum limit value.

Conveniently, the charging means 7 can draw on the electrical charge stored within the storage means 24 to reduce the energy consumed by the consumption network 2 and speed up the charging of the electric vehicle 8.

In this way, the charging means 7 are configured to charge the electric vehicle 8 more or less quickly depending on the availability of consumption from the consumption network 2 and/or of the electricity stored by the storage means 24. According to the invention, the adjusting means 18 are of the type of an electronic data processing device, such as e.g. a microcontroller, CPU or the like, configured to control the operation of the charging means 7.

Preferably, the second communication device 13 is positioned between the consumption network 2 and the adjusting means 18. In this way, the second communication device 13 is configured to communicate at least one of the consumption of the consumption network 2, the maximum limit and the electricity stored by the storage means 24 to the adjusting means 18. Consequently, the adjusting means 18 are configured to control the charging of the electric vehicle 8 depending on at least one of the consumption of the consumption network 2, the maximum limit or the electricity stored by the storage means 24.

According to the invention, the metering means 16, 17 comprises:
- at least one consumption metering device 16, positioned between the consumption network 2 and the supply network 3, and configured to meter the consumption of the electricity supplied by the supply network 3;
- at least one production metering device 17, positioned between the consumption network 2 and the production means 20 of electricity, and configured to meter the consumption of electricity produced by the production means 20.

Additional embodiments of the system 1 cannot however be ruled out, wherein both the production means 20 and the storage means 24 are connected to the consumption network 2 by means of the production metering device 17.

According to the invention, the transmission means 14, 15a, 15b comprise at least a second transmission device 15a mounted on the consumption metering device 16 and at least one additional second transmission device 15b mounted on the production metering device 17.

In this way, the management/monitoring means 6 are configured to detect at least one of the consumption of electricity supplied by the supply network 3 or the consumption of electricity produced by the production means 20.

Preferably, the command means 11 are configured to show at least one of the supplied electricity consumption and the produced electricity consumption to at least one user.

Advantageously, the management/monitoring means 6 are configured to detect at least one characteristic datum of the charging means 7 selected from the list comprising: the charging rate of the electric vehicle 8, the remaining charging time to complete the charge of the electric vehicle 8, the energy consumption of the charging means 7, the energy consumption of the consumption network 2, the electricity output of the production means 20, the electricity stored by the storage means 24, the input of electricity into the consumption network 2 and/or into the supply network 3 by the electric vehicle 8 and/or by the production means 20 and/or by the storage means 24.

According to the example of the invention, the command means 11 are configured to show at least one of the characteristic data to at least one user.

It has in practice been ascertained that the described invention achieves the intended objects.

In particular, the fact is emphasized that the PLC communication means enable the management/monitoring means to communicate with the charging means directly on the consumption line, without the need to install a physical link specifically made for this purpose and significantly facilitating the communication with the charging means.

Advantageously, the PLC communication and transmission means enable the management/monitoring means 6 to manage/monitor the charging means of electric vehicles according to the status of the power grid to which the charging means themselves are connected.

In addition, the PLC communication and transmission means enable the management/monitoring of both the charging means and the power grid to which the charging means are connected.

## Claims

1. System (1) for the management/monitoring of charging means of electric vehicle, comprising:
- at least one electricity consumption network (2), operationally connected to an electricity supply network (3), and configured to distribute electricity supplied at least by the supply network (3);
- charging means (7) of at least one electric vehicle (8), operationally connected to said consumption network (2) to charge the electric vehicle (8);
- management/monitoring means (6) of said charging means (7), operationally connected to said consumption network (2) and configured to control/monitor said charging means (7);
- power-line communication (PLC) means (12, 13) positioned between said charging means (7) and said management/monitoring means (6), and configured to allow the communication between said management/monitoring means (6) and said charging means (7) by means of said consumption network (2);
wherein said consumption network (2) extends internally/externally to a building (4) defining a plurality of rooms/spaces (5), said consumption network (2) comprising a plurality of connecting points (22) to the network itself, arranged inside different rooms/spaces (5) and to which are connectable in a removable manner said management/monitoring means (6), said charging means (7) and electric loads defining, at least partly, the consumption of the same consumption network,
and in that said system (1) comprises:
- metering means (16, 17) configured to meter the consumption of electricity of said consumption network (2) and to interrupt the supply of said supplied electricity when the consumption thereof by said consumption network (2) reaches a maximum limit of consumption;
- power-line communication (PLC) transmission means (14, 15a, 15b), positioned between said metering means (16, 17) and said management/monitoring means (6), and configured to allow the communication between said metering means (16, 17) and said management/monitoring means (6) by means of said consumption network (2);
wherein said metering means (16, 17) comprise:
- at least one consumption metering device (16), positioned between said consumption network (2) and the supply network (3), and configured to meter the consumption of the electricity supplied by the supply network (3);
- at least one production metering device (17), positioned between said consumption network (2) and production means (20) of electricity, said production means for electricity operationally connected to said consumption network and configured to produce electricity, and configured to meter the consumption of the electricity produced by the production means (20).

2. System (1) according to claim 1, **characterized by** the fact that said management/monitoring means (6) are configured to:
- activate/deactivate said charging means (7); and/or
- adjust the charging time of the electric vehicle (8); and/or
- adjust the electricity consumption of said charging means (7); and/or
- schedule the activation/deactivation of said charging means (7).

3. System (1) according to one or more of the preceding claims, **characterized by** the fact that said management/monitoring means (6) comprise connecting means (19) to command means (11) configured to control said management/monitoring means (6).

4. System (1) according to one or more of the preceding claims, **characterized by** the fact that it further comprises:
- storage means (24) of electricity, operationally connected to said consumption network (2) and configured to store at least part of the electricity produced by said production means (20).

5. System (1) according to claim 4, **characterized by** the fact that it comprises power-line communication (PLC) connecting means (22, 23), positioned between said management/monitoring means (6) and said storage means (24), and configured to allow the communication between said management/monitoring means (6) and said storage means (24) by means of said consumption network (2).

6. System (1) according to one or more of the preceding claims, **characterized by** the fact that said charging means (7) comprise adjusting means (18) configured to increase/reduce the electricity consumed by the same charging means to charge the electric vehicle (8) depending on at least one of said energy consumption of said consumption network (2), said maximum limit of consumption or said electricity stored by said storage means (24).

7. System (1) according to one or more of the preceding claims, **characterized by** the fact that at least one of said communication means (12, 13), said transmission means (14, 15a, 15b) or said connecting means (22, 23) are configured to communicate on said consumption network (2) on a different communication band from at least another of said communication means (12, 13), said transmission means (14, 15a, 15b) or said connecting means (22, 23).

8. System (1) according to one or more of the preceding claims, **characterized by** the fact that:
- said communication means (12, 13) comprise at least a first communication device (12), mounted on said management/monitoring means (6), and at least a second communication device (13) mounted on said charging means (7), at least one of said communication devices (12, 13) being configured to transmit/receive data/information by means of said consumption network (2) to/from the other communication device (12, 13); and/or
- said transmission means (14, 15a, 15b) comprise at least a first transmission device (14), mounted on said management/monitoring means (6), and at least a second transmission device (15a, 15b) mounted on said metering means (16, 17), at least one of said transmission devices (14, 15a, 15b) being configured to transmit/receive data/information by means of said consumption network (2) to/from the other transmission device (14, 15a, 15b); and/or
- said connecting means (22, 23) comprise at least a first connecting device (22), mounted on said management/monitoring means (6), and at least a second connecting device (23) mounted on said storage means (24), at least one of said connecting devices (22, 23) being configured to transmit/receive data/information by means of said consumption network (2) to the other of said connecting devices (22, 23).

9. System (1) according to one or more of the preceding claims, **characterized by** the fact that said management/monitoring means (6) are configured to detect at least one characteristic datum of at least one of said charging means (7), said production means (20), said storage means (24) and said metering means (16, 17), selected from the list comprising: the charging rate of the electric vehicle (8), the remaining charging time to complete the charge of the electric vehicle (8), the energy consumption of said charging means (7), the energy consumption of said consumption network (2), the electricity output of said production means (20), the electricity stored by said storage means (24), the input of electricity into said consumption network (2) and/or into said supply network (3) by the electric vehicle (8) and/or by said production means (20) and/or by said storage means (24).

## Patentansprüche

1. System (1) zur Verwaltung/Überwachung von Ladeeinrichtungen für elektrische Fahrzeuge, umfassend:
- mindestens ein Stromverbrauchsnetz (2), das mit einem Stromversorgungsnetz (3) in Wirkverbindung steht und dazu ausgebildet ist, den zumindest vom Versorgungsnetz (3) gelieferten Strom zu verteilen;
- Mittel (7) zum Laden mindestens eines elektrischen Fahrzeugs (8), die mit dem Verbrauchsnetz (2) in Wirkverbindung stehen, um das elektrische Fahrzeug (8) zu laden;
- Verwaltungs-/Überwachungseinrichtungen (6) der Mittel (7) zum Laden, die mit dem Verbrauchsnetz (2) in Wirkverbindung stehen und zur Steuerung/Überwachung der Mittel (7) zum Laden ausgebildet sind;
- Power-Line-Kommunikationsmittel (PLC) (12, 13), die zwischen den Mitteln (7) zum Laden und den Verwaltungs-/Überwachungseinrichtungen (6) angeordnet und dazu ausgebildet sind, die Kommunikation zwischen den Verwaltungs-/Überwachungseinrichtungen (6) und den Mitteln (7) zum Laden über das Verbrauchsnetz (2) zu ermöglichen;
wobei das Verbrauchsnetz (2) sich innerhalb/außerhalb eines Gebäudes (4) erstreckt, das mehrere Räumlichkeiten/Räume (5) definiert, wobei das Verbrauchsnetz (2) mehrere Verbindungspunkte (22) zum Netz selbst umfasst, die innerhalb verschiedener Räumlichkeiten/Räume (5) angeordnet sind und an die die Verwaltungs-/Überwachungseinrichtungen (6), die Mittel (7) zum Laden und elektrische Lasten auf entfernbare Weise anschließbar sind, wobei die Mittel (7) zum Laden und die elektrischen Lasten zumindest teilweise den Verbrauch desselben Verbrauchsnetzes definieren,
und dass das System (1) umfasst:
- Messmittel (16, 17), die ausgebildet sind, um den Stromverbrauch des Verbrauchsnetzes (2) zu messen und die Zufuhr des zugeführten Stroms zu unterbrechen, wenn dessen Verbrauch durch das Verbrauchsnetz (2) einen maximalen Verbrauchsgrenzwert erreicht;
- Power-Line-Kommunikation (PLC) übertragende Mittel (14, 15a, 15b), die zwischen den Messmitteln (16, 17) und den Verwaltungs-/Überwachungseinrichtungen (6) angeordnet und so ausgebildet sind, dass sie die Kommunikation zwischen den Messmitteln (16, 17) und den Verwaltungs-/Überwachungseinrichtungen (6) über das Verbrauchsnetz (2) ermöglichen;
wobei die Messmittel (16, 17) umfassen:
- mindestens eine Verbrauchsmessvorrichtung (16), die zwischen dem Verbrauchsnetz (2) und dem Versorgungsnetz (3) angeordnet und dazu ausgebildet ist, den Verbrauch des vom Versorgungsnetz (3) gelieferten Stroms zu messen;
- mindestens eine Erzeugungsmessvorrichtung (17), die zwischen dem Verbrauchsnetz (2) und einer Stromerzeugungsvorrichtung (20) angeordnet ist, wobei die Stromerzeugungsvorrichtung in Wirkverbindung mit dem Verbrauchsnetz steht und zur Erzeugung von Strom ausgebildet ist, und die zum Messen des Verbrauchs des von der Erzeugungsvorrichtung (20) erzeugten Stroms ausgebildet ist.

2. System (1) nach Anspruch 1, **dadurch gekennzeichnet, dass** die Verwaltungs-/Überwachungseinrichtungen (6) ausgebildet sind, um:
- die Mittel (7) zum Laden zu aktivieren/deaktivieren;
- und/oder die Ladezeit des elektrischen Fahrzeugs (8) anzupassen; und/oder
- den Stromverbrauch der Mittel (7) zum Laden anzupassen; und/oder
- die Aktivierung/Deaktivierung der Mittel (7) zum Laden zu planen.

3. System (1) nach einem oder mehreren der vorstehenden Ansprüche, **dadurch gekennzeichnet, dass** die Verwaltungs-/Überwachungseinrichtungen (6) Verbindungsmittel (19) zu Steuermitteln (11) umfassen, die zur Steuerung der Verwaltungs-/Überwachungseinrichtungen (6) ausgebildet sind.

4. System (1) nach einem oder mehreren der vorstehenden Ansprüche, **dadurch gekennzeichnet, dass** es ferner umfasst:
- Speichermittel (24) für Elektrizität, die mit dem Verbrauchsnetz (2) in Wirkverbindung stehen und dazu ausgebildet sind, zumindest einen Teil der von der Erzeugungsvorrichtung (20) erzeugten Elektrizität zu speichern.

5. System (1) nach Anspruch 4, **dadurch gekennzeichnet, dass** es Power-Line-Kommunikation (PLC) verbindende Mittel (22, 23) umfasst, die zwischen den Verwaltungs-/Überwachungseinrichtungen (6) und den Speichermitteln (24) angeordnet und dazu ausgebildet sind, die Kommunikation zwischen den Verwaltungs-/Überwachungseinrichtungen (6) und den Speichermitteln (24) über das Verbrauchsnetz (2) zu ermöglichen.

6. System (1) nach einem oder mehreren der vorstehenden Ansprüche, **dadurch gekennzeichnet, dass** die Mittel (7) zum Laden Einstellmittel (18) umfassen, die dazu ausgebildet sind, den von denselben Ladeeinrichtungen zum Laden des elektrischen Fahrzeugs (8) verbrauchten Strom in Abhängigkeit von dem Energieverbrauch des Verbrauchsnetzes (2), dem maximalen Verbrauchsgrenzwert und/oder dem von den Speichermitteln (24) gespeicherten Strom zu erhöhen/zu verringern.

7. System (1) nach einem oder mehreren der vorstehenden Ansprüche, **dadurch gekennzeichnet, dass** die Kommunikationsmittel (12, 13), die übertragenden Mittel (14, 15a, 15b) und/oder verbindenden Mittel (22, 23) dazu ausgebildet sind, auf dem Verbrauchsnetz (2) auf einem anderen Kommunikationsband als mindestens ein anderes der Kommunikationsmittel (12, 13), der übertragenden Mittel (14, 15a, 15b) oder der verbindenden Mittel (22, 23) zu kommunizieren.

8. System (1) gemäß einem oder mehreren der vorstehenden Ansprüche, **dadurch gekennzeichnet, dass**:
- die Kommunikationsmittel (12, 13) mindestens eine erste Kommunikationsvorrichtung (12) umfassen, die an den Verwaltungs-/Überwachungseinrichtungen (6) angebracht ist, und mindestens eine zweite Kommunikationsvorrichtung (13), die an den Mitteln (7) zum Laden angebracht ist, wobei mindestens eine der Kommunikationsvorrichtungen (12, 13) dazu ausgebildet ist, Daten/Informationen mittels des Verbrauchsnetzes (2) an die andere Kommunikationsvorrichtung (12, 13) zu senden/von dieser zu empfangen; und/oder
- die übertragenden Mittel (14, 15a, 15b) mindestens eine erste Übertragungsvorrichtung (14), die an den Verwaltungs-/Überwachungseinrichtungen (6) angebracht ist, und mindestens eine zweite Übertragungsvorrichtung (15a, 15b) umfassen, die an den Messmitteln (16, 17) angebracht ist, wobei mindestens eine der Übertragungsvorrichtungen (14, 15a, 15b) dazu ausgebildet ist, Daten/Informationen mittels des Verbrauchsnetzes (2) an die andere Übertragungsvorrichtung (14, 15a, 15b) zu senden/von dieser zu empfangen; und/oder
- die verbindenden Mittel (22, 23) mindestens eine erste Verbindungsvorrichtung (22), die an der Verwaltungs-/Überwachungseinrichtung (6) angebracht ist, und mindestens eine zweite Verbindungsvorrichtung (23) umfassen, die an den Speichermitteln (24) angebracht ist, wobei mindestens eine der Verbindungsvorrichtungen (22, 23) dazu ausgebildet ist, Daten/Informationen mittels des Verbrauchsnetzes (2) an die andere Verbindungsvorrichtung (22, 23) zu senden/von dieser zu empfangen.

9. System (1) nach einem oder mehreren der vorstehenden Ansprüche, **dadurch gekennzeichnet, dass** die Verwaltungs-/Überwachungseinrichtungen (6) dazu ausgebildet sind, mindestens eine charakteristische Größe der Mittel (7) zum Laden, der Erzeugungsvorrichtungen (20), der Speichermittel (24) und/oder der Messmittel (16, 17) zu erfassen, ausgewählt aus einer Liste, die umfasst: die Ladegeschwindigkeit des elektrischen Fahrzeugs (8), die verbleibende Ladezeit bis zum Abschluss der Ladung des elektrischen Fahrzeugs (8), den Energieverbrauch der Mittel (7) zum Laden, den Energieverbrauch des Verbrauchsnetzes (2), die elektrische Leistungsabgabe der Erzeugungsvorrichtung (20), die von den Speichermitteln (24) gespeicherte elektrische Energie, die Einspeisung von elektrischer Energie in das Verbrauchsnetz (2) und/oder in das Versorgungsnetz (3) durch das elektrische Fahrzeug (8) und/oder durch die Erzeugungsvorrichtung (20) und/oder durch die Speichermittel (24).

## Revendications

1. - Système (1) pour la gestion/surveillance de moyens de charge d'un véhicule électrique, comprenant :
- au moins un réseau de consommation d'électricité (2), connecté fonctionnellement à un réseau d'alimentation en électricité (3) et configuré pour distribuer de l'électricité fournie au moins par le réseau d'alimentation (3) ;
- des moyens de charge (7) d'au moins un véhicule électrique (8), connectés fonctionnellement audit réseau de consommation (2) pour charger le véhicule électrique (8) ;
- des moyens de gestion/surveillance (6) desdits moyens de charge (7), connectés fonctionnellement audit réseau de consommation (2) et configurés pour commander/surveiller lesdits moyens de charge (7) ;
- des moyens de communication par courants porteurs en ligne (CPL) (12, 13) positionnés entre lesdits moyens de charge (7) et lesdits moyens de gestion/surveillance (6) et configurés pour permettre la communication entre lesdits moyens de gestion/surveillance (6) et lesdits moyens de charge (7) à l'aide dudit réseau de consommation (2) ;
dans lequel ledit réseau de consommation (2) s'étend à l'intérieur/extérieur d'un bâtiment (4) définissant une pluralité de pièces/d'espaces (5), ledit réseau de consommation (2) comprenant une pluralité de points de connexion (22) au réseau lui-même, disposés à l'intérieur de différentes pièces/différents espaces (5) et auxquels sont aptes à être connectés d'une manière amovible lesdits moyens de gestion/surveillance (6), lesdits moyens de charge (7) et des charges électriques définissant, au moins en partie, la consommation du même réseau de consommation, et ledit système (1) comprenant :
- des moyens de mesure (16, 17) configurés pour mesurer la consommation d'électricité dudit réseau de consommation (2) et pour interrompre la fourniture de ladite électricité fournie lorsque la consommation de celle-ci par ledit réseau de consommation (2) atteint une limite maximale de consommation ;
- des moyens de transmission par communication par courants porteurs en ligne (CPL) (14, 15a, 15b), placés entre lesdits moyens de mesure (16, 17) et lesdits moyens de gestion/surveillance (6) et configurés pour permettre la communication entre lesdits moyens de mesure (16, 17) et lesdits moyens de gestion/surveillance (6) à l'aide dudit réseau de consommation (2) ;
lesdits moyens de mesure (16, 17) comprenant :
- au moins un dispositif de mesure de consommation (16), positionné entre ledit réseau de consommation (2) et le réseau d'alimentation (3) et configuré pour mesurer la consommation de l'électricité fournie par le réseau d'alimentation (3) ;
- au moins un dispositif de mesure de production (17), qui est positionné entre ledit réseau de consommation (2) et des moyens de production (20) d'électricité, lesdits moyens de production d'électricité étant connectés fonctionnellement audit réseau de consommation et configurés pour produire de l'électricité, et qui est configuré pour mesurer la consommation de l'électricité produite par les moyens de production (20).

2. - Système (1) selon la revendication 1, **caractérisé par le fait que** lesdits moyens de gestion/surveillance (6) sont configurés pour :
- activer/désactiver lesdits moyens de charge (7) ; et/ou
- ajuster le temps de charge du véhicule électrique (8) ; et/ou
- ajuster la consommation d'électricité desdits moyens de charge (7) ; et/ou
- programmer l'activation/désactivation desdits moyens de charge (7).

3. - Système (1) selon une ou plusieurs des revendications précédentes, **caractérisé par le fait que** lesdits moyens de gestion/surveillance (6) comprennent des moyens de connexion (19) à des moyens de commande (11) configurés pour commander lesdits moyens de gestion/surveillance (6).

4. - Système (1) selon une ou plusieurs des revendications précédentes, **caractérisé par le fait qu'**il comprend en outre :
- des moyens de stockage (24) d'électricité, connectés fonctionnellement audit réseau de consommation (2) et configurés pour stocker au moins une partie de l'électricité produite par lesdits moyens de production (20).

5. - Système (1) selon la revendication 4, **caractérisé par le fait qu'**il comprend des moyens de connexion (22, 23) par communication par courants porteurs en ligne (CPL), positionnés entre lesdits moyens de gestion/surveillance (6) et lesdits moyens de stockage (24) et configurés pour permettre la communication entre lesdits moyens de gestion/surveillance (6) et lesdits moyens de stockage (24) à l'aide dudit réseau de consommation (2).

6. - Système (1) selon une ou plusieurs des revendications précédentes, **caractérisé par le fait que** lesdits moyens de charge (7) comprennent des moyens de réglage (18) configurés pour augmenter/réduire l'électricité consommée par les mêmes moyens de charge pour charger le véhicule électrique (8) en fonction d'au moins l'une parmi ladite consommation d'énergie dudit réseau de consommation (2), ladite limite maximale de consommation ou ladite électricité stockée par lesdits moyens de stockage (24).

7. - Système (1) selon une ou plusieurs des revendications précédentes, **caractérisé par le fait qu'**au moins l'un parmi lesdits moyens de communication (12, 13), lesdits moyens de transmission (14, 15a, 15b) et lesdits moyens de connexion (22, 23) est configuré pour communiquer sur ledit réseau de consommation (2) sur une bande de communication différente par rapport à au moins un autre parmi lesdits moyens de communication (12, 13), lesdits moyens de transmission (14, 15a, 15b) et lesdits moyens de connexion (22, 23).

8. - Système (1) selon une ou plusieurs des revendications précédentes, **caractérisé par le fait que** :
- lesdits moyens de communication (12, 13) comprennent au moins un premier dispositif de communication (12), monté sur lesdits moyens de gestion/surveillance (6), et au moins un second dispositif de communication (13) monté sur lesdits moyens de charge (7), au moins l'un desdits dispositifs de communication (12, 13) étant configuré pour transmettre/recevoir des données/informations à l'aide dudit réseau de consommation (2) vers/depuis l'autre dispositif de communication (12, 13) ; et/ou
- lesdits moyens de transmission (14, 15a, 15b) comprennent au moins un premier dispositif de transmission (14), monté sur lesdits moyens de gestion/surveillance (6), et au moins un second dispositif de transmission (15a, 15b) monté sur lesdits moyens de mesure (16, 17), au moins l'un desdits dispositifs de transmission (14, 15a, 15b) étant configuré pour transmettre/recevoir des données/informations à l'aide dudit réseau de consommation (2) vers/depuis l'autre dispositif de transmission (14, 15a, 15b) ; et/ou
- lesdits moyens de connexion (22, 23) comprennent au moins un premier dispositif de connexion (22), monté sur lesdits moyens de gestion/surveillance (6), et au moins un second dispositif de connexion (23), monté sur lesdits moyens de stockage (24), au moins l'un desdits dispositifs de connexion (22, 23) étant configuré pour transmettre/recevoir des données/informations à l'aide dudit réseau de consommation (2) à l'autre desdits dispositifs de connexion (22, 23).

9. - Système (1) selon une ou plusieurs des revendications précédentes, **caractérisé par le fait que** lesdits moyens de gestion/surveillance (6) sont configurés pour détecter au moins une donnée caractéristique d'au moins l'un parmi lesdits moyens de charge (7), lesdits moyens de production (20), lesdits moyens de stockage (24) et lesdits moyens de mesure (16, 17), choisie dans la liste comprenant : le taux de charge du véhicule électrique (8), le temps de charge restant pour achever la charge du véhicule électrique (8), la consommation d'énergie desdits moyens de charge (7), la consommation d'énergie dudit réseau de consommation (2), la production d'électricité desdits moyens de production (20), l'électricité stockée par lesdits moyens de stockage (24), l'entrée d'électricité dans ledit réseau de consommation (2) et/ou dans ledit réseau d'alimentation (3) par le véhicule électrique (8) et/ou par lesdits moyens de production (20) et/ou par lesdits moyens de stockage (24).
